# EUROPÄISCHE PATENTSCHRIFT

(11) **EP 0 528 368 B1**
(45) Veröffentlichungstag und Bekanntmachung des Hinweises auf die Patenterteilung: **01.03.1995**
(21) Anmeldenummer: 92113863.2
(22) Anmeldetag: 14.08.1992
(51) Int. Cl.: C09D 161/20

(54) **Härtbare Überzugsmassen**
Curable coating compositions
Compositions de revêtement durcissables

(30) Priorität: 21.08.1991 DE 4127605
(43) Veröffentlichungstag der Anmeldung: 24.02.1993
(73) Patentinhaber: HOECHST AKTIENGESELLSCHAFT, 65926 Frankfurt am Main (DE)
(72) Erfinder: Brindöpke, Gerhard, Dr., W-6231 Sulzbach (DE); Kurth, Inge, DI., W-6200 Wiesbaden (DE); Schwab, Michael, Dr., W-6272 Niedernhausen-Oberjosbach (DE); Walz, Gerd, Dr., W-6200 Wiesbaden (DE)

(56) Entgegenhaltungen:
- EP-A- 0 395 439
- DE-A- 2 132 318
- FR-A- 2 404 661
- US-A- 4 002 699

## Beschreibung

Die Erfindung betrifft durch energiereiche Strahlung oder radikalisch härtbare Bindemittel in Form eines polymerisierbaren, ungesättigten Harzes mit (Meth)-Acryl-Gruppen auf der Basis von Urethanen oder Harnstoffen.

Es ist bekannt, daß Überzugsmassen, die als Bindemittel Acrylat-Gruppen tragende Präpolymere enthalten, durch energiereiche Strahlung gehärtet werden können und dabei Überzüge mit guter Haftung, glatter Oberfläche und guter Abrieb- und Schlagfestigkeit ergeben.

Nach der DT-AS 17 45 540 werden solche Harze hergestellt durch Umsetzung von Melamin/Formaldehyd-Kondensaten mit Hydroxyacrylaten. Als Katalysatoren bei dieser Umsetzung werden Kationenaustauschharze oder Silikate eingesetzt. In der DT-AS 21 32 318 sind recht kompliziert aufgebaute, Elektronenstrahl-härtbare Anstrich- und Überzugsmassen auf Acrylat-Basis beschrieben, die unter anderem ein Umsetzungsprodukt eines Amin/Formaldehyd-Kondensates mit einem Hydroxyacrylat enthalten. Die Umsetzung wird dabei im schwach alkalischen oder im schwach sauren Medium, z.B. in Gegenwart von Acrylsäure durchgeführt. Auch die Elektronenstrahl-härtbaren Acrylat-modifizierten Melamin/Formaldehyd-Kondensate nach der CH-PS 560 729 werden durch Umsetzung im schwach sauren Bereich, z.B. in Gegenwart von Ameisensäure, hergestellt.

Harze dieser Art sind auch aus der DE-OS 25 50 740 bekannt. Die dort beschriebenen Harze werden dagegen in Gegenwart starker Säuren hergestellt.

Dem genannten Stand der Technik ist gemeinsam, daß die Aminoplastbildner zunächst mit Formaldehyd methyloliert und anschließend mit einem Alkohol verethert werden. Es wurde nun gefunden, daß man derartige Harze herstellen kann, indem man die Urethane bzw. Harnstoffe gleichzeitig mit Formaldehyd und dem Hydroxyalkyl(meth)acrylat in Gegenwart eines sauren Ionenaustauschers umsetzt.

Gegenstand der Erfindung sind somit härtbare Bindemittel, erhalten durch gleichzeitige Umsetzung von
A) Urethanen oder Harnstoffen,
B) Hydroxygruppen enthaltenden Acryl- oder Methacrylverbindungen,
C) Paraformaldehyd und
D) gegebenenfalls Polyolen,
wobei für den Fall, daß kein Polyol D) mit umgesetzt wird, die Reaktion in Gegenwart eines sauren Ionenaustauschers, und für den Fall, daß ein Polyol D) mit umgesetzt wird, die Reaktion in Gegenwart eines sauren Ionenaustauschers oder einer starken Säure erfolgt.

Bei den Urethanen und Harnstoffen, die für die vorliegende Erfindung in Frage kommen, handelt es sich bevorzugt um Verbindungen der Formel 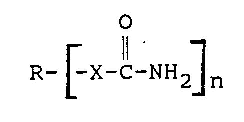
worin
X ein Sauerstoffatom oder eine Gruppe der Formel -NH- und
n = eine Zahl von 1 bis 5 bedeuten und R für den Fall, daß n = 1 ist, C₁-C₁₀-Alkyl, Benzyl, Phenyl oder eine Gruppe der Formeln R¹-OCH₂CH₂- oder R¹-O-CH(CH)₃-CH₂- und R für den Fall, daß n eine Zahl von 2 bis 5 bedeutet, C₄-C₁₅-Alkylen, Phenylen, eine Gruppe der Formeln -(OCH₂CH₂)ₓO- oder -(OCH(CH₃)CH₂)ₓO- bedeutet, wobei der Wert für den Index x so gewählt ist, daß die Polyoxialkylengruppen Molmassen von 100 bis 15000 aufweisen, und R¹ Wasserstoff, C₁-C₄-Alkyl oder Phenyl bedeutet. Beispiele für solche Verbindungen sind Methyl-, Ethyl-, Butyl-, Cyclohexyl-, Phenylurethan und die entsprechenden Harnstoffverbindungen, sowie die Umsetzungsprodukte von Ammoniak oder Aminoalkoholen wie z.B. Ethanolamin oder Propanolamin mit Ethylen- oder Propylencarbonat, sowie die Umsetzungsprodukte von Di- oder Triolen wie z.B. Hexandiol, Trimethylolpropan, Polyethylenglykol oder Polypropylenglykol mit Harnstoff, wobei Ammoniak abgespalten wird und ein Di- oder Polyurethan gebildet wird. Besonders bevorzugt sind Ethyl- und Butylurethan.

Als Komponente B werden Hydroxygruppen enthaltende Acryl- oder Methacrylverbindungen genommen. Bevorzugt sind dabei Monoester der (Meth)acrylsäure mit C₂-C₄-Alkandiolen wie Hydroxyethyl(meth)acrylat, Hydroxypropyl(meth)acrylat und Butandiolmonoacrylat.

Geeignete Polyole als Komponente D) sind C₂-C₁₅- Di-, -Tri- oder -Tetraole wie zum Beispiel Trimethylolpropan, Ethylenglykol, Butylenglykol, Pentaerythrit oder Pentandiol; Polyesterpolyole, Polyetherpolyole und Polycarbonatdiole oder -triole.

Derartige hydroxylgruppenhaltige Polyester können durch Veresterung von Dicarbonsäuren mit Diolen und Triolen nach gut bekannten Methoden (vgl. z. B. P. J. Flory, J. Am. Chem.Soc. 58, 1877 (1936) und J. Am. Chem. Soc. 63, 3083 (1953)) hergestellt werden. Die Umsetzung kann dabei in Substanz oder in Gegenwart eines Schleppmittels durchgeführt werden.

Die Ausgangsstoffe für solche hydroxylgruppenhaltigen Polyester (= Polyesterpolyole) sind dem Fachmann gut bekannt. So sind für diese Umsetzung geeignete Dicarbonsäuren, beispielweise Phthalsäure, Isophthalsäure, Terephthalsäure, Hexahydrophthalsäure, Bernsteinsäure, Glutarsäure, Adipinsäure, Pimelinsäure, Korksäure, Azelainsäure und Sebazinsäure, deren Isomere und deren veresterbare Derivate, wie z. B. die Anhydride oder Dialkylester der genannten Säuren. Als Beispiele für geeignete Diole seien Alkylenglykole, wie z. B. Ethylenglykol, Propylenglykol-1,2 und -1,3, Butandiol-1,4, Pentandiol-1,2, Neopentylglykol, Hexandiol-1,6, 2-Methylpentandiol-1,5, 2-Ethylenbutandiol-1,4 und Dimethylolcyclohexan genannt. Geeignete Triole sind z. B. Glycerin, Trimethylolethan, Trimethylolpropan und Trimethylolbutan. Geeignete höherwertige Polyole sind z. B. Pentaerythrit, Di-(trimethylolpropan), Di-(pentaerythrit) und Sorbitol. Weitere, für die Herstellung der Polyester geeignete Di- bzw. Polyole sind die durch Umsetzung der oben genannten Alkohole mit Ethylen- oder Propylenoxid erhältlichen alkoxilierten Derivate.

Geeignete Polyole D) sind außerdem auch Polylactondiole und -triole. Diese Produkte erhält man beispielsweise durch Umsetzung von ε-Caprolacton mit einem Diol. Solche Produkte sind in der US-PS 3 169 945 beschrieben.

Die Polylactonpolyole, die man durch diese Umsetzung erhält, zeichnen sich durch die Gegenwart einer endständigen Hydroxylgruppe und durch wiederkehrende Polyesteranteile, die sich von dem Lacton ableiten, aus. Diese wiederkehrenden Molekülanteile können der Formel 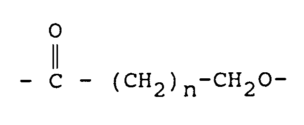
entsprechen, in der n bevorzugt 2 bis 10 ist.

Das als Ausgangsmaterial verwendete Lacton kann ein beliebiges Lacton oder eine beliebige Kombination von Lactonen sein, wobei dieses Lacton mindestens 4 Kohlenstoffatome in dem Ring enthalten sollte. Das als Ausgangsmaterial verwendete Lacton kann durch die folgende allgemeine Formel dargestellt werden, 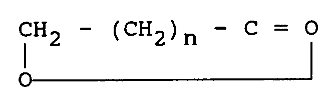
in der n die bereits zuvor angegebene Bedeutung hat. Das bei der Erfindung für die Herstellung der Polylactondiole bevorzugte Lacton ist ε-Caprolacton, bei dem n den Wert 4 hat. Außerdem können verschiedene andere Lactone einzeln oder in Kombination benutzt werden.

Beispiele von für die Umsetzung mit dem Lacton geeigneten aliphatischen Diolen sind die bereits oben für die Umsetzung mit den Carbonsäuren aufgeführten Diole.

Die in dem erfindungsgemäßen Verfahren einsetzbaren hydroxylgruppenhaltigen Polyether (= Polyetherpolyole) können durch Umsetzung von zwei- und/oder mehrwertigen Alkoholen mit verschiedenen Mengen an Ethylenoxid und/oder Propylenoxid nach gut bekannten Methoden (vgl. z. B. Houben-Weyl, Band XIV, 2, Makromolekulare Stoffe II, (1963)) erhalten werden.

Einsetzbar sind auch die Polymerisationsprodukte des Tetrahydrofurans. Das zahlenmittlere Molekulargewicht der Polyetherpolyole liegt zwischen 400 und 4000, bevorzugt zwischen 450 und 2000.

Als Polycarbonat-diole und -triole sind hydroxylgruppenhaltige Polyester der Kohlensäure mit Di- oder Triolen geeignet, insbesondere Ester auf der Basis von Ethylenglykol, Butandiol, Hexandiol oder Neopentylglykol. Diese Polycarbonat-polyole haben ein Molekulargewicht (Mₙ) von 200 bis 4000.

Bevorzugt werden Polyester oder Polyether eingesetzt, die eine OH-Funktionalität zwischen 2 und 3,5 aufweisen.

Die zuvor geschilderten Urethane bzw. Harnstoffe, (Meth)acrylverbindungen und gegebenenfalls Polyole werden zusammen mit Paraformaldehyd in Gegenwart eines sauren Ionenaustauschers in einem einzigen Reaktionsschritt gemeinsam umgesetzt. Die Menge an Paraformaldehyd hängt ab von der Art der ersten Ausgangskomponente. Arbeitet man mit Urethanen, so beträgt das Molverhältnis von Urethan zu Paraformaldehyd, gerechnet als HCHO, 1 zu 4 bis 1 zu 0,5. Werden Harnstoffe als erste Ausgangskomponente gewählt, so beträgt das Molverhältnis Harnstoff zu Paraformaldehyd (HCHO) 1 zu 5 bis 1 zu 0,5. Der Anteil der Polyole kann je nach gewünschten anwendungstechnischen Eigenschaften variiert werden. Im allgemeinen beträgt das Molverhältnis der Hydroxygruppen enthaltenden (Meth)acrylatverbindung zu dem OH-Äquivalent in dem Polyol 1 zu 0,05 bis 0,1 zu 0,9. Falls Polyole als Komponente D) eingesetzt werden, wird das Verhältnis von Urethanen zur Polyolen im allgemeinen so gewählt, daß das Verhältnis von NH-Äquivalenten zu OH-Äquivalenten 1 : 1 bis 1 : 3, vorzugsweise 1: 1 bis 1 : 2 beträgt. Beim Einsatz von Harnstoffen beträgt das Verhältnis der NH-Äquivalente zu OH-Äquivalenten 1 : 0,5 bis 1 : 1,5, vorzugsweise 1 : 0,5 bis 1: 1.

Die Reaktion wird durch Kationenaustauscher in der Säureform katalysiert. Hierfür kommen alle üblichen und bekannten synthetischen Austauscher in Frage, ebenso aber auch natürliche Austauscher in Form von Silikaten wie beispielsweise Montmorillonit. Die Menge an Ionenaustauscher beträgt hier 0,05 bis 2 Gew.-% für synthetische Austauscher und 1 bis 10 Gew.-% für natürliche Austauscher.

Bei der Mitverwendung von Polyolen D) kann die Reaktion auch durch Zugabe von starken Säuren wie beispielsweise Schwefelsäure, p-Toluolsulfonsäure, Methansulfonsäure, Phosphorsäure oder Perchlorsäure katalysiert werden.

Die Umsetzung wird vorzugsweise in Gegenwart von 0,01 bis 0,5 Gew.%, bezogen auf die beiden erstgenannten Komponenten, Inhibitoren durchgeführt, welche die Polymerisation der Acryl-Verbindungen verhindern sollen. Geeignet sind z.B Hydrochinon, Hydrochinonmonoalkyläther, Phenothiazin oder Salze des N-Nitrosocyclohexylamins.

Als Polymerisationsinhibitor eignen sich insbesondere:
- Alpha-substituierte phenolische Verbindungen, wobei vergleichsweise schwer flüchtige Verbindungen, insbesondere auf Basis entsprechend substituierter einwertiger oder mehrwertiger Phenole besonders geeignet sind,
- nicht-substituierte Phenolverbindungen, insbesondere Hydrochinon, wobei sich hier allerdings der Zusatz von Aktivkohle schon zum Reaktantengemisch zur Einstellung heller Farbwerte im Reaktionsprodukt empfiehlt sowie
- als physiologisch besonders interessante Polymerisationsinhibitoren Vertreter aus der Klasse der Tocopherole und insbesondere wenigstens anteilsweise das Alpha-Tocopherol (Vitamin E).

Im einzelnen gilt dabei das folgende:
Besonders geeignete Vertreter der erstgenannten Klasse Alpha-substituierter Phenolverbindungen sind Di-substituierte Hydrochinonderivate, wobei dem 2,5-Di-tert.-butyl-hydrochinon eine besondere Bedeutung zukommt. Weitere Beispiele sind p-Methoxyphenol, 2,5-Di-tert.-butyl-p-kresol, Methylhydrochinon und/oder Tert.-butyl-brenzkatechin. Insbesondere gelingt es aber mit dem bereits genannten 2,5-Di-tert.-butylhydrochinon strahlenhärtbare polyfunktionelle (Meth)acrylsäureester mit hoher Reinheit und insbesondere geringer Eigenfarbe auch unter vergleichsweise scharfen Verfahrensbedingungen herzustellen. Die dabei anfallenden Reaktionsprodukte zeichnen sich zudem durch hohe Lagerstabilität aus.

Werden Alpha-ständig nicht-substituierte Phenolverbindungen als Inhibitoren eingesetzt - wie bereits angegeben ist Hydrochinon hier ein besonders wichtiger Vertreter - führt die Mitverwendung von Aktivkohle schon bei der Kondensationsreaktion zur wirkungsvollen Verhinderung unerwünscht stark verfärbter Reaktionsprodukte. Die Menge der Aktivkohle kann dabei in breiten Grenzen gewählt werden. Sie soll bevorzugt ein Mehrfaches der Menge der als Inhibitor eingesetzten phenolischen Verbindung ausmachen. Wenn auch schon mit dem 1- bis 10fachen befriedigende Farbaufhellungen im Reaktionsprodukt eingestellt werden können, so wird im allgemeinen doch die Aktivkohle in größeren Mengen, beispielsweise im Bereich des 10- bis 100fachen und zweckmäßigerweise im Bereich von etwa dem 20- bis 60fachen der Hydrochinonmenge eingesetzt.

Werden Tocopherole und insbesondere das Vitamin E als Polymerisationsinhibitoren eingesetzt, so gelingt nicht nur die Gewinnung der Umsetzungsprodukte in der angestrebten Reinheit, die physiologische Verträglichkeit der hier verwendeten Inhibitorkomponente ist ein weiterer Vorteil im Sinne des erfindungsgemäßen Handelns.

Die Reaktionstemperatur kann zwischen 50 und 150 °C, vorzugsweise zwischen 70 und 120 °C liegen. Bei der Kondensation entstehendes Wasser wird im Verlauf der Reaktion abdestilliert. Dies kann entweder dadurch geschehen, daß bei Unterdruck, z.B. zwischen 133 und 8·10⁴ Pa (1 und 600 Torr) gearbeitet wird oder daß man die Umsetzung in Gegenwart von azeotropen Schleppmitteln, wie z.B. Cyclohexan, Toluol oder Xylol durchführt. Die Reaktion dauert im allgemeinen 10 Minuten bis 5 Stunden. Sie kann durch Abfiltration des Ionenaustauschers beendet werden. Die erhaltenen polymerisierbaren ungesättigten Harze haben je nach gewähltem Ausgangsprodukt im allgemeinen eine Viskosität zwischen 20 und 4000 mPas (20 °C).

Diese Umsetzungsprodukte lassen sich als Bindemittel oder auch als Reaktivverdünner in härtbaren Überzugsmassen verwenden.

Niedrigviskose Harze der zuvor beschriebenen Art stellen für sich schon brauchbare Überzugsmassen dar. Sie eignen sich aber auch als reaktive Verdünner für hochviskose strahlenhärtbare Harze. Diese Bindemittel oder Verdünner können in Mengen von 0 bis 80, vorzugsweise von 10 bis 60 Gew.%, bezogen auf die Überzugsmasse, angewandt werden. Daneben können aber auch zusätzlich übliche reaktive Verdünner wie beispielsweise Butandioldiacrylat, Trimethylolpropantriacrylat, N-Vinylpyrrolidon, Divinylharnstoff, Hexandioldiacrylat oder 2-Äthylhexylacrylat mit eingesetzt werden.

Zur Erzielung besonderer Effekte können den Überzugsmassen anorganische oder organische Pigmente, wie z.B. Titandioxid oder Füllstoffe, wie Talkum, in Mengen von 0 bis 80, vorzugsweise von 3 bis 60 Gew.%, bezogen auf die Überzugsmasse, zugesetzt werden.

Ferner können die in der Lackindustrie üblichen organischen Zusatzstoffe, wie Thixotropiermittel, Verlaufsmittel, Entlüftungsmittel oder Gleitmittel in Mengen von bis zu 10 Gew.% anwesend sein.

Neben den erfindungsgemäßen, durch Polymerisation härtbaren ungesättigten Harzen können die Überzugsmassen noch 0 bis 90 Gew.% anderer polymersierbarer ungesättigter Bindemittel enthalten, z.B. ungesättigte Polyester oder Acrylatmodifizierte Epoxidharze, Polyurethane und gesättigte Polyester.

Die erfindungsgemäßen Bindemittel können zum Lackieren von Substraten, wie Holz, Glas, Textilien, Metall, Papier oder Kunststoff verwendet werden, ferner als Spachtelmassen oder als Druckfarben.

Die Aushärtung erfolgt durch Polymerisation der Acryl-Gruppen. Sie kann entweder mit Hilfe von Elektronenstrahlen einer Energie zwischen 50 und 500 KeV oder durch UV-Licht iniziiert werden. Im letzteren Fall werden den Überzugsmassen Photoinitiatoren, wie sie z. B. in UV&EB Curing Formulations for Printing Inks, Coatings & Paints, ISBN 0 947798 02 1 oder in der deutschen Offenlegungsschrift 38 15 622 beschrieben werden, zweckmäßigerweise in Mengen von 0,5 bis 10 Gew.%, zugesetzt.

Die Vorteile der erfindungsgemäßen Bindemittel bestehen darin, daß die Produkte eine niedrige Viskosität aufweisen und damit leicht handhabbar sind. Außerdem werden im vorliegenden Fall die Bindemittel nach einem vereinfachten Verfahren hergestellt, nämlich in einem einzigen Reaktionsschritt. Eine Veretherung der methylolierten Urethane und Harnstoffe, wie es gemäß dem Stand der Technik nötig ist, entfällt hier. Darüber hinaus zeichnen sich die erfindungsgemäßen Produkte dadurch aus, daß sie nur einen geringen Anteil an nicht-umgesetztem Hydroxyalkylacrylat enthalten und daß der Anteil des einpolymerisierten Hydroxylalkylacrylats höher ist als beim Stand der Technik.

Die in den folgenden Beispiele genannten Teile sind Gewichtsteile.

### Beispiel 1:

Ein Gemisch aus 117 Teilen Butylurethan, 82,5 Teilen Paraformaldehyd (ca. 91,2 % ig), 209 Teilen Hydroxyethylacrylat (HEA), 0,1 Teilen Hydrochinonmonomethylether und 1,8 Teilen eines stark sauren Ionenaustauschers wird unter Durchleiten von Luft binnen 30 min auf 90-100 °C erhitzt; nach weiteren 60 min Rühren bei gleicher Temperatur werden binnen 1,5 h bei 100-120 mbar Druck die flüchtigen Bestandteile abdestilliert.
Nach Abkühlung auf 50 °C wird der Katalysator abfiltriert und man erhält 340 Teile einer farblosen Flüssigkeit mit den folgenden Kenndaten:
Viskosität: 44 mPas
Gehalt an Doppelbindungen:11,5 %
OH-Zahl: 22 mg KOH/g
Gehalt an freiem HEA: 4,5 %
Mol gebundenes HEA/Mol Urethan: ca. 1,7

### Beispiel 2:

Ein Gemisch aus 117 Teilen Butylurethan, 82,5 Teilen Paraformaldehyd (ca. 91,2 % ig), 209 Teilen Hydroxyethylacrylat (HEA), 0,1 Teilen Hydrochinonmonomethylether und 3 Teilen eines stark sauren Ionenaustauschers wird unter Durchleiten von Luft binnen 30 min auf 90-100 °C erhitzt; nach weiteren 60 min Rühren bei gleicher Temperatur werden binnen 1,5 h bei 100-120 mbar Druck die flüchtigen Bestandteile abdestilliert.
Nach Abkühlung auf 50 °C wird der Katalysator abfiltriert und man erhält 339 Teile einer farblosen Flüssigkeit mit den folgenden Kenndaten:
Viskosität: 44 mPas
Gehalt an Doppelbindungen:11,5 %
OH-Zahl: 13 mg KOH/g
Gehalt an freiem HEA: 2,7 %
Mol gebundenes HEA/Mol Urethan: ca. 1,7

### Beispiel 3:

Ein Gemisch aus 89 Teilen Ethylurethan, 82,5 Teilen Paraformaldehyd (ca. 91,2 % ig), 209 Teilen Hydroxyethylacrylat (HEA), 0,1 Teilen Hydrochinonmonomethylether und 2,8 Teilen eines stark sauren Ionenaustauschers wird unter Durchleiten von Luft binnen 30 min auf 90-100 °C erhitzt; nach weiteren 60 min Rühren bei gleicher Temperatur werden binnen 1,5 h bei 100-120 mbar Druck die flüchtigen Bestandteile abdestilliert.
Nach Abkühlung auf 50 °C wird der Katalysator abfiltriert und man erhält 320 Teile einer farblosen Flüssigkeit mit den folgenden Kenndaten:
Viskosität: 44 mPas
Gehalt an Doppelbindungen:12,8 %
OH-Zahl: 33 mg KOH/g
Gehalt an freiem HEA: 6,8 %
Mol gebundenes HEA/Mol Urethan: ca. 1,6

### Beispiel 4:

Ein Gemisch aus 117 Teilen Butylurethan, 82,5 Teilen Paraformaldehyd (ca. 91,2 % ig), 174 Teilen Hydroxyethylacrylat (HEA), 195 Teilen eines handelsüblichen Polytetrahydrofurans (Hersteller BASF, PTHF 650, OH-Zahl: 86 mg KOH/g), 0,1 Teilen Hydrochinonmonomethylether und 3 Teilen eines stark sauren Ionenaustauschers wird Durchleiten von Luft binnen 30 min auf 90-100 °C erhitzt; nach weiteren 60 min Rühren bei gleicher Temperatur werden binnen 1,5 h bei 100-120 mbar Druck die flüchtigen Bestandteile abdestilliert.
Nach Abkühlung auf 50 °C wird der Katalysator abfiltriert und man erhält 339 Teile einer farblosen Flüssigkeit mit den folgenden Kenndaten:
Viskosität: 335 mPas
Gehalt an Doppelbindungen: 6,3 %
OH-Zahl: 31 mg KOH/g

### Beispiel 5:

Ein Gemisch aus 117 Teilen Butylurethan, 82,5 Teilen Paraformaldehyd (ca. 91,2 % ig), 174 Teilen Hydroxyethylacrylat (HEA), 45 Teilen Polyethylenglykol 300, 0,1 Teilen Hydrochinonmonomethylether und 1,9 Teilen eines stark sauren Ionenaustauschers werden unter Durchleiten von Luft binnen 30 min auf 90-100 °C erhitzt; nach weiteren 60 min Rühren bei gleicher Temperatur werden binnen 1,5 h bei 100-120 mbar Druck die flüchtigen Bestandteile abdestilliert.
Nach Abkühlung auf 50 °C wird der Katalysator abfiltriert und man erhält 356 Teile einer farblosen Flüssigkeit mit den folgenden Kenndaten:
Viskosität: 86 mPas
Gehalt an Doppelbindungen: 9,5 %
OH-Zahl: 30 mg KOH/g

### Beispiel 6:

Ein Gemisch aus 117 Teilen Butylurethan, 82,5 Teilen Paraformaldehyd (ca. 91,2 % ig), 174 Teilen Hydroxyethylacrylat (HEA), 54 Teilen eines Polycaprolactons (Fa. Interox, CAPA 305, OH-Zahl 312 mg KOH/g), 0,1 Teilen Hydrochinonmonomethylether und 1,9 Teilen eines stark sauren Ionenaustauschers wird unter Durchleiten von Luft binnen 30 min auf 90-100 °C erhitzt; nach weiteren 60 min Rühren bei gleicher Temperatur werden binnen 1,5 h bei 100-120 mbar Druck die flüchtigen Bestandteile abdestilliert.
Nach Abkühlung auf 50 °C wird der Katalysator abfiltriert und man erhält 360 Teile einer farblosen Flüssigkeit mit den folgenden Kenndaten:
Viskosität: 158 mPas
Gehalt an Doppelbindungen: 9,4 %
OH-Zahl: 32 mg KOH/g

### Beispiel 7:

Ein Gemisch aus 117 Teilen Butylurethan, 82,5 Teilen Paraformaldehyd (ca. 91,2 % ig), 174 Teilen Hydroxyethylacrylat (HEA), 17,7 Teilen Hexandiol-1.6, 0,1 Teilen Hydrochinonmonomethylether und 1,7 Teilen eines stark sauren Ionenaustauschers wird unter Durchleiten von Luft binnen 30 min auf 90-100 °C erhitzt; nach weiteren 60 min Rühren bei gleicher Temperatur werden binnen 1,5 h bei 100-120 mbar Druck die flüchtigen Bestandteile abdestilliert.
Nach Abkühlung auf 50 °C wird der Katalysator abfiltriert und man erhält 332 Teile einer farblosen Flüssigkeit mit den folgenden Kenndaten:
Viskosität: 71 mPas
Gehalt an Doppelbindungen: 10,2 %
OH-Zahl: 29 mg KOH/g
Als Ionenaustauscher wurde in allen Beispielen Amberlyst 15 genommen.

### Vergleich 1: (Arbeitsweise analog zu Beispiel 4 aus DOS 2558482)

117 Teile Butylurethan und 205 Teile Formalinlsg. 37 % wurden mit gesättigter Natriumcarbonatlösung auf einen pH-Wert von 8 eingestellt und 60 min bei 80-85°C gerührt. Binnen 1 h wurden anschließend im Wasserstrahlvakuum 110 Teile eines Gemisches aus Wasser und Formaldehyd abdestilliert.
Der Rückstand wurde nach Zugabe von 0,1 Teilen Hydrochinonmonomethylether, 3,2 Teilen conz. Salzsäure und 209 Teilen Hydroxyethylacrylat für 30 min auf 100°C erhitzt. Anschließend wurden bei gleicher Temperatur und 130 mbar Druck binnen 1,5 h die flüchtigen Bestandteile abdestilliert (Gewichtsverlust: ca. 31 Teile).
Als Rückstand verblieben 382 Teile einer klaren Flüssigkeit mit folgenden Kenndaten:
Viskosität: 33 mPas
Gehalt an Doppelbindungen:11,9 %
OH-Zahl: 104 mg KOH/g
Gehalt an freiem HEA: 21,5 %
Mol gebundenes HEA /Mol Urethan: ca. 1,1

### Vergleich 2: (Arbeitsweise analog zu den Beispielen 1-3 aus DOS 2558482 bzw. DE 1745540)

a) Herstellung des butylveretherten Urethanharzes
   117 Teile Butylurethan, 370 Teile n-Butanol und 82 Teile Paraformaldehyd wurden mit 2,5 Teilen sauren Ionenaustauscher für 1,5 h auf 100-110°C erhitzt. Anschließend wurden binnen 1,5 h bei 100 mbar Druck und gleicher Temperatur die flüchtigen Bestandteile abdestilliert. Nach Filtration erhielt man 303 Teile einer klaren farblosen Flüssigkeit mit folgenden Kenndaten:
   Feststoffgehalt (1h 125 °C): 94,5 %
   OH-Zahl: 11 (entspricht einem Gehalt an Butanol von 1,6 %)
b) Umetherung mit Hydroxyethylacrylat in Gegenwart eines sauren Ionenaustauschers
   Der obige Rückstand wurde mit 210 Teilen Hydroxyethylacrylat, 0,1 Teilen Hydrochinonmonomethylether und 2,1 Teilen eines sauren Ionenaustauschers versetzt und 30 min bei 100°C gerührt; anschließend wurden binnen 3 h bei gleicher Temperatur und 100 mbar Druck die flüchtigen Bestandteile abdestilliert (ca. 144 Teile).
   Der Rückstand wurde filtriert und man erhielt 326 Teile einer farblosen klaren Flüssigkeit mit den Kenndaten:
   Viskosität: 28 mPas
   Gehalt an Doppelbindungen:8,9 %
   OH-Zahl: 102 mg KOH/g
   Gehalt an freiem HEA: 21,1 %
   Mol gebundenes HEA /Mol Urethan: ca. 1,2

### Vergleich 3: (Arbeitsweise analog zu den Beispielen 1-3 aus DOS 2558482 bzw DE 1745540)

a) Herstellung des Ausgangsmaterials wie unter 2a) beschrieben
b) Umetherung mit Hydroxyethylacrylat in Gegenwart von Salzsäure
   Der Rückstand aus Vergleichsbeispiel 2a) wurde mit 210 Teilen Hydroxyethylacrylat, 0,1 Teilen Hydrochinonmonomethylether und 2 Teilen konz. Salzsäure versetzt und 30 min bei 100°C gerührt; anschließend wurden binnen 3 h bei gleicher Temperatur und 100 mbar Druck die flüchtigen Bestandteile abdestilliert (ca. 188 Teile).
   Der Rückstand wurde filtriert und man erhielt 384 Teile einer farblosen klaren Flüssigkeit mit den Kenndaten:
   Viskosität: 14 mPas
   Gehalt an Doppelbindungen:10,1 %
   OH-Zahl: 152 mg KOH/g
   Gehalt an freiem HEA: 31,4 %
   Mol gebundenes HEA /Mol Urethan: ca. 0,8

## Patentansprüche (Patentansprüche für folgende(n) Vertragsstaat(en): AT, BE, CH, DE, DK, FR, GB, IT, LI, NL, PT, SE)

1. Härtbare Bindemittel erhalten durch gleichzeitige Umsetzung von
A) Urethanen oder Harnstoffen
B) Hydroxygruppen enthaltenden Acryl- oder Methacrylverbindungen
c) Paraformaldehyd und
D) gegebenenfalls Polyolen,
wobei für den Fall, daß kein Polyol D) mit umgesetzt wird, die Reaktion in Gegenwart eines sauren Ionenaustauschers, und für den Fall, daß ein Polyol D) mit umgesetzt wird, die Reaktion in Gegenwart eines sauren Ionenaustauschers oder einer starken Säure erfolgt.

2. Bindemittel nach Anspruch 1, dadurch gekennzeichnet, daß sie in Gegenwart von Polymerisationsinhibitoren hergestellt werden.

3. Bindemittel nach Anspruch 1, dadurch gekennzeichnet, daß sie aus Urethanen oder Harnstoffen der Formel 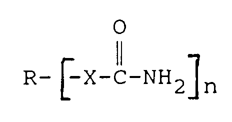 aufgebaut sind, worin
X ein Sauerstoffatom oder eine Gruppe der Formel -NH- und n eine Zahl von 1 bis 5 bedeuten und R für den Fall, daß n 1 ist, C₁-C₁₀-Alkyl, Benzyl, Phenyl oder eine Gruppe der Formeln R¹-OCH₂CH₂- oder R¹-O-CH(CH)₃-CH₂ und R für den Fall, daß n eine Zahl von 2 bis 5 bedeutet, C₄-C₁₅-Alkylen, Phenylen, eine Gruppe der Formeln -(OCH₂CH₂)ₓO- oder -(OCH(CH₃)CH₂)ₓO- bedeutet, wobei der Wert für den Index x so gewählt ist, daß die Polyoxialkylengruppen Molmassen von 100 bis 15000 aufweisen, und R¹ Wasserstoff, C₁-C₄-Alkyl oder Phenyl bedeuten.

4. Bindemittel nach Anspruch 1, dadurch gekennzeichnet, daß sie aus Ethyl- oder Butylurethan als Komponente A) hergestellt werden.

5. Bindemittel nach Anspruch 1, dadurch gekennzeichnet, daß sie aus (Meth)acrylsäure-C₂-C₄-alkylestern als Komponente B) hergestellt werden.

6. Bindemittel nach Anspruch 1, dadurch gekennzeichnet, daß sie aus C₂-C₁₅-Di-, -Tri- oder -Tetraolen; Polyesterpolyolen; Polyetherpolyolen; Polycarbonatdiolen oder Polycarbonattriolen als Komponente D) hergestellt werden.

7. Verfahren zur Herstellung der Bindemittel nach Anspruch 1, dadurch gekennzeichnet, daß man
A) Urethane oder Harnstoffe,
B) Hydroxygruppen enthaltende Acryl- oder Methacrylverbindungen,
C) Paraformaldehyd und
D) gegebenenfalls Polyole
umsetzt, wobei für den Fall, daß kein Polyol D) mit umgesetzt wird, die Reaktion in Gegenwart eines sauren Ionenaustauschers, und für den Fall, daß ein Polyol D) mit umgesetzt wird, die Reaktion in Gegenwart eines sauren Ionenaustauschers oder einer starken Säure erfolgt.

8. Verwendung der Bindemittel nach Anspruch 1 zum Lackieren von Substraten, als Spachtelmassen oder als Druckfarben.

## Patentansprüche (Patentansprüche für folgende(n) Vertragsstaat(en): ES)

1. Verfahren zur Herstellung eines härtbaren Bindemittels, dadurch gekennzeichnet, daß man
A) Urethane oder Harnstoffe,
B) Hydroxygruppen enthaltende Acryl- oder Methacrylverbindungen,
C) Paraformaldehyd und
D) gegebenenfalls Polyole
umsetzt, wobei für den Fall, daß kein Polyol D) mit umgesetzt wird, die Reaktion in Gegenwart eines sauren Ionenaustauschers, und für den Fall, daß ein Polyol D) mit umgesetzt wird, die Reaktion in Gegenwart eines sauren Ionenaustauschers oder einer starken Säure erfolgt.

2. Verfahren nach Anspruch 1, dadurch gekennzeichnet, daß man in Gegenwart von Polymerisationsinhibitoren arbeitet.

3. Verfahren nach Anspruch 1, dadurch gekennzeichnet, daß man Urethane oder Harnstoffe der Formel 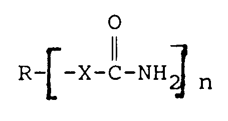 einsetzt, worin
X ein Sauerstoffatom oder eine Gruppe der Formel -NH- und n eine Zahl von 1 bis 5 bedeuten und R für den Fall, daß n 1 ist, C₁-C₁₀-Alkyl, Benzyl, Phenyl oder eine Gruppe der Formeln R¹-OCH₂CH₂- oder R¹-O-CH(CH)₃-CH₂ und R für den Fall, daß n eine Zahl von 2 bis 5 bedeutet, C₄-C₁₅-Alkylen, Phenylen, eine Gruppe der Formeln -(OCH₂CH₂)ₓO- oder -(OCH(CH₃)CH₂)ₓO- bedeutet, wobei der Wert für den Index x so gewählt ist, daß die Polyoxialkylengruppen Molmassen von 100 bis 15000 aufweisen, und R¹ Wasserstoff, C₁-C₄-Alkyl oder Phenyl bedeuten.

4. Verfahren nach Anspruch 1, dadurch gekennzeichnet, daß man Ethyl- oder Butylurethan als Komponente A) nimmt.

5. Verfahren nach Anspruch 1, dadurch gekennzeichnet, daß man (Meth)acrylsäure-C₂-C₄-alkylester als Komponente B) nimmt.

6. Verfahren nach Anspruch 1, dadurch gekennzeichnet, daß man C₂-C₁₅-Di-, Tri- oder Tetraole; Polyesterpolyole; Polycarbonattriole als Komponente D) nimmt.

7. Verwendung der Bindemittel hergestellt nach Anspruch 1 zum Lackieren von Substraten, als Spachtelmassen oder als Druckfarben.

## Claims (Claims for the following Contracting State(s): AT, BE, CH, DE, DK, FR, GB, IT, LI, NL, PT, SE)

1. A curable binder obtained by simultaneous reaction of
A) a urethane or urea,
B) an acrylic or methacrylic compound containing hydroxyl groups,
C) paraformaldehyde and
D) if appropriate, a polyol,
wherein, in the case where no polyol D) is also reacted, the reaction is carried out in the presence of an acid ion exchanger, and in the case where a polyol D) is also reacted, the reaction is carried out in the presence of an acid ion exchanger or a strong acid.

2. A binder as claimed in claim 1, which is prepared in the presence of a polymerization inhibitor.

3. A binder as claimed in claim 1, which is built up from a urethane or urea of the formula 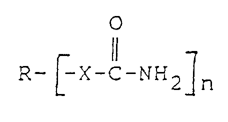 in which
X is an oxygen atom or a group of the formula -NH- and n is a number from 1 to 5, and, in the case where n is 1, R is C₁-C₁₀-alkyl, benzyl, phenyl or a group of the formula R¹-OCH₂CH₂- or R¹-O-CH(CH)₃-CH₂- and in the case where n is a number from 2 to 5, R is C₄-C₁₅-alkylene, phenylene or a group of the formula -(OCH₂CH₂)ₓO- or -(OCH(CH₃)CH₂)ₓO-, in which the value for the index x is chosen such that the polyoxyalkylene groups have molecular weights of 100 to 1500, and R¹ is hydrogen, C₁-C₄-alkyl or phenyl.

4. A binder as claimed in claim 1, which is prepared from ethyl- or butylurethane as component A).

5. A binder as claimed in claim 1, which is prepared from a (meth)acrylic acid C₂-C₄-alkyl ester as component B).

6. A binder as claimed in claim 1, which is prepared from a C₂-C₁₅-di-, tri- or -tetraol; polyester-polyol; polyether-polyol; polycarbonate-diol or polycarbonate-triol as component D).

7. A process for the preparation of a binder as claimed in claim 1, which comprises reacting
A) a urethane or urea,
B) an acrylic or met hacrylic compound containing hydroxyl groups,
C) paraformaldehyde and
D) if appropriate, a polyol,
wherein, in the case where no polyol D) is also reacted, the reaction is carried out in the presence of an acid ion exchanger, and in the case where a polyol D) is also reacted, the reaction is carried out in the presence of an acid ion exchanger or a strong acid.

8. The use of a binder as claimed in claim 1 for coating substrates, as a filler composition or as a printing ink.

## Claims (Claims for the following Contracting State(s): ES)

1. A process for the production of a curable binder wherein
A) a urethane or urea,
B) an acrylic or methacrylic compound containg hydroxyl groups,
C) paraformaldehyde and
D) if appropriate, a polyol
are reacted and where, in the case no polyol D) is also reacted, the reaction is carried out in the presence of an acid ion exchanger, and in the case where a polyol D) is also reacted, the reaction is carried out in the presence of an acid ion exchanger or a strong acid.

2. A process as claimed in claim 1, wherein the preparation is carried out in the presence of a polymerization inhibitor.

3. A process as claimed in claim 1, wherein a urethane or urea of the formula 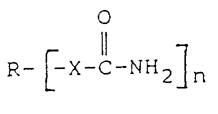 is used, in which
X is an oxygen atom or a group of the formula -NH- and n is a number from 1 to 5, and, in the case where n is 1, R is C₁-C₁₀-alkykl, benzyl, phenyl or a group of the formula R¹-OCH₂CH₂- or R¹-O-CH(CH)₃-CH₂- and in the case where n is a number from 2 to 5, R is C₄-C₁₅-alkylene, phenylene or a group of the formula -(OCH₂CH₂)ₓO- or -(OCH(CH₃)CH₂)ₓO-, in which the value for the index x is chosen such that the polyoxyalkylene groups have molecular weights of 100 to 15.000, and R¹ is hydrogen, C₁-C₄-alkyl or phenyl.

4. A process as claimed in claim 1, wherein ethyl- or butylurethane is used as component A).

5. A process as claimed in claim 1, wherein (meth)acrylic acid C₂-C₄-alkyl ester is used as componet B).

6. Process as claimed in claim 1, wherein C₂-C₁₅-di-, tri- or - tetraol, polyester-polyol, polether-polyol, polycarbonate-diol or polycarbonate-triol is used as component D).

7. The use of a binder produced as claimed in claim 1 for coating substrates, as a filler composition or as a printing ink.

## Revendications (Revendications pour l'(les) Etat(s) contractant(s) suivant(s): AT, BE, CH, DE, DK, FR, GB, IT, LI, NL, PT, SE)

1. Agents liants durcissables obtenus par réaction concomitante
A) des uréthannes ou des urées,
B) des composés acryliques ou méthacryliques comportant des groupes hydroxy,
C) du paraformaldéhyde, et
D) éventuellement des polyols,
de telle sorte que, si l'on ne fait réagir aucun polyol D), la réaction s'effectue en présence d'un échangeur d'ions acide, et dans le cas où l'on utilise un polyol D) dans la réaction, la réaction est effectuée en présence d'un échangeur d'ions acide ou d'un acide fort.

2. Agents liants selon la revendication 1, caractérisés en ce qu'ils sont produits en présence d'inhibiteurs de polymérisation.

3. Agents liants selon la revendication 1, caractérisés en ce qu'ils sont formés d'uréthannes ou d'urées de formule 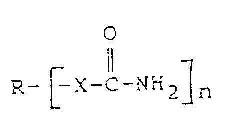 dans laquelle
X représente un atome d'oxygène ou un groupe de formule -NH- et
n représente un nombre de 1 à 5, et R, dans le cas où n = 1, représente un alkyle en C₁-C₁₀, le benzyle, le phényle ou un groupe de formules R¹-OCH₂CH₂- ou R¹-O-CH(CH)₃-CH₂- et R, dans le cas où n est un nombre de 2 à 5, représente un alkylène en C₄-C₁₅, le phénylène, un groupe de formules -(OCH₂CH₂)ₓO- ou
-(OCH(CH₃)CH₂)ₓO-, la valeur de l'indice x étant choisie de telle sorte que les groupes polyoxyalkylènes présentent des masses molaires de 100 à 15 000, et R¹ représente l'hydrogène, un alkyle en C₁-C₄ ou le phényle.

4. Agents liants selon la revendication 1, caractérisés en ce qu'ils sont préparés à partir d'éthyl- ou butyluréthanne comme composant A.

5. Agents liants selon la revendication 1, caractérisés en ce qu'ils sont préparés à partir d'esters d'alkyles en C₂-C₄ de l'acide (méth)acrylique comme composant B.

6. Agents liants selon la revendication 1, caractérisés en ce qu'ils sont préparés à partir de di-, tri- ou tétraols en C₂-C₁₅ ; de polyesterpolyols ; de polyétherpolyols ; de polycarbonatediols ou de polycarbonatetriols comme composant D).

7. Procédé pour préparer les agents liants selon la revendication 1, caractérisé en ce que l'on fait réagir
A) des uréthannes ou des urées,
B) des composés acryliques ou méthacryliques comportant des groupes hydroxy,
C) du paraformaldéhyde, et
D) éventuellement des polyols,
de telle sorte que, si l'on ne fait réagir aucun polyol D), la réaction s'effectue en présence d'un échangeur d'ions acide, et dans le cas où l'on utilise un polyol D) dans la réaction, la réaction est effectuée en présence d'un échangeur d'ions acide ou d'un acide fort.

8. Utilisation des agents liants selon la revendication 1, pour le laquage de substrats, en tant que mastics ou en tant qu'encres d'impression.

## Revendications (Revendications pour l'(les) Etat(s) contractant(s) suivant(s): ES)

1. Procédé pour préparer un agent liant durcissable, caractérisé en ce que l'on fait réagir
A) des uréthannes ou des urées,
B) des composés acryliques ou méthacryliques comportant des groupes hydroxy,
C) du paraformaldéhyde, et
D) éventuellement des polyols,
de telle sorte que, si l'on ne fait réagir aucun polyol D), la réaction s'effectue en présence d'un échangeur d'ions acide, et dans le cas où l'on utilise un polyol D) dans la réaction, la réaction est effectuée en présence d'un échangeur d'ions acide ou d'un acide fort.

2. Procédé selon la revendication 1, caractérisé en ce que l'on travaille en présence d'inhibiteurs de polymérisation.

3. Procédé selon la revendication 1, caractérisé en ce que l'on utilise des uréthannes ou des urées de formule 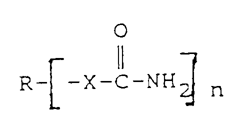 dans laquelle
X représente un atome d'oxygène ou un groupe de formule -NH- et
n représente un nombre de 1 à 5, et R, dans le cas où n = 1, représente un alkyle en C₁-C₁₀, le benzyle, le phényle ou un groupe de formules R¹-OCH₂CH₂- ou R¹-O-CH(CH)₃-CH₂- et R, dans le cas où n est un nombre de 2 à 5, représente un alkylène en C₄-C₁₅, le phénylène, un groupe de formules -(OCH₂CH₂)ₓO- ou -(OCH(CH₃)CH₂)ₓO-, la valeur de l'indice x étant choisie de telle sorte que les groupes polyoxyalkylènes présentent des masses molaires de 100 à 15 000, et R¹ représente l'hydrogène, un alkyle en C₁-C₄ ou le phényle.

4. Procédé selon la revendication 1, caractérisé en ce que l'on prend l'éthyl- ou butyluréthanne comme composant A).

5. Procédé selon la revendication 1, caractérisé en ce que l'on utilise des esters d'alkyles en C₂-C₄ de l'acide (méth)acrylique comme composant B.

6. Procédé selon la revendication 1, caractérisé en ce que l'on utilise des di-, tri- ou tétraols en C₂-C₁₅ ; des polyesterpolyols ; des polyétherpolyols ; des poly-carbonatediols ou des polycarbonatetriols comme composant D).

7. Utilisation des agents liants préparés selon la revendication 1, pour le laquage de substrats, en tant que mastics ou en tant qu'encres d'impression.
